# EUROPÄISCHE PATENTSCHRIFT

(11) **EP 2 460 943 B1**
(45) Veröffentlichungstag und Bekanntmachung des Hinweises auf die Patenterteilung: **26.08.2015**
(21) Anmeldenummer: 11009304.4
(22) Anmeldetag: 24.11.2011
(51) Int. Cl.: E03D 1/012, F16L 5/06, E03D 1/32

(54) **Spülkasten**
Flushing cistern
Réservoir de chasse d'eau

(30) Priorität: 03.12.2010 DE 102010053223
(43) Veröffentlichungstag der Anmeldung: 06.06.2012
(73) Patentinhaber: GROHEDAL Sanitärsysteme GmbH, 32457 Porta Westfalica (DE)
(72) Erfinder: Korte, Hermann, 32545 Bad Oeynhausen (DE)
(74) Vertreter: Ziegler, Thomas

(56) Entgegenhaltungen:
- DE-A1- 10 337 131
- DE-C1- 4 322 032
- DE-U1- 20 303 522
- US-B1- 6 443 497

## Beschreibung

Die Erfindung betrifft einen Spülkasten gemäß dem Oberbegriff des Patentanspruchs 1.

Ein derartiger Spülkasten ist aus der DE 103 37 131 A1 bekannt. Hier wird die Spülwasserzuflussleitung durch eine Öffnung in der Spülkastenwand hindurchgeführt. Um eine Verdrehsicherung des Anschlussstücks gegenüber dem Flanschteil zu gewährleisten, mit dem das Anschlussstück an der Spülkastenwand festgelegt wird, ist sowohl die Außenkontur des Anschlussstücks als auch die Öffnung des Flanschteils sechseckig vorgesehen. Somit ist die erforderliche Bearbeitung des Anschlussstücks hinsichtlich seiner Geometrie recht aufwändig. Da das Anschlussstück üblicherweise aus Messing und das Flanschteil aus Kunststoff besteht, sind zudem bestimmte äußere Abmessungen notwenig, um eine ausreichende Festigkeit bei der Kraftübertragung zu gewährleisten. Dadurch ist es erforderlich, die Abmessungen des Anschlussstücks zu vergrößern, wodurch ein erhöhter Materialbedarf und damit höhere Kosten entstehen.
Zudem offenbart die DE 203 03 522 U1 einen Spülkasten mit einem in einer Öffnung einer Spülkastenwand angeordneten Anschlussstück für eine innere und eine äußere Spülwasserzuflussleitung und einem Adapter zur Fixierung des Anschlussstücks in der Spülkastenwand, wobei das Anschlussstück axial festliegend und verdrehsicher in dem Adapter gelagert ist. Auch aus der EP 2 177 676 A1 ist ein Spülkasten mit einer Aufnahmeeinrichtung für einen Wasseranschluss bekannt, die eine Hülse, einen Schieber und eine Mutter aufweist. Das Anschlussstück weist ebenfalls ein Mehrkantprofil auf, das in der Mehrkantöffnung der Hülse drehsicher gelagert ist. Um das Anschlussstück axial in der Hülse zu sichern, ist der Schieber an der oberen Öffnung der Hülse angeordnet, der je nach Positionierung das Anschlussstück in der Hülse zurückhält oder freigibt.

Weiterhin zeigt die DE 43 22 032 C1 eine Vorrichtung zu abgedichteten Verlegen von Rohren oder Leitungen. Hierzu wird ein Dichtkörper mittels einer Druckschraube in einem Doppelnippel festgelegt. Der Doppelnippel weist zur axialen Festlegung des Dichtkörpers auf der einen Seite einen Anschlagkragen und auf der anderen Seite ein Außengewinde zur Befestigung einer Druckschraube auf. Zur axialen Sicherung des Dichtkörpers sind somit wenigstens zwei Bauteile notwendig.

Der Erfindung liegt somit die Aufgabe zugrunde, einen derartigen Spülkasten zu verbessern. Die Aufgabe wird durch einen Spülkasten mit den Merkmalen des Patentanspruchs 1 gelöst. Vorteilhafte Weiterbildungen sind Gegenstand von Unteransprüchen.

Mit der Erfindung wird ein Spülkasten mit einem in einer Öffnung einer Spülkastenwand angeordneten Anschlussstück für eine innere und eine äußere Spülwasserzuflussleitung und einem Gehäuse zur Fixierung des Anschlussstücks in der Spülkastenwand bereitgestellt, wobei das Anschlussstück axial festliegend und verdrehsicher in dem Gehäuse gelagert ist. Dabei besteht das Gehäuse aus zwei Gehäusehälften, die formschlüssig miteinander verbunden werden können. Üblicherweise bestehen Anschlussstücke für Spülwasserleitungen aus Messing und weisen an beiden Enden ein Gewinde zum Anschluss der inneren und äußeren Spülwasserleitung auf. Im Gegensatz dazu bestehen die Spülkästen und deren Wände sowie die Befestigungsmittel zur Fixierung der Anschlussstücke an den Spülkastenwänden aus Kunststoff.
Um eine ausreichende Verdrehsicherung des Anschlussstücks in dem Gehäuse zu gewährleisten, müssen die Querkräfte und die Kräfte, die aus einem auf den Anschluss wirkenden Torsionsmoment resultieren, das bei der Befestigung der Spülkastenleitungen auftreten kann, in das Gehäuse eingeleitet und dort zerstörungsfrei aufgenommen werden können. Hierzu sind entsprechende Abmessungen erforderlich, um die maximal zulässige Flächenpressung auf die Kunststoffteile nicht zu überschreiten.
Zur Übertragung der Kräfte und sicheren Lagerung im Gehäuse ist am Anschlussstück pro Gehäusehälfte wenigstens ein Vorsprung angeformt. Weiterhin ist pro Gehäusehälfte wenigstens eine Aufnahme für den Vorsprung des Anschlussstückes vorgesehen. Damit ergibt sich zwischen Anschlussstück und Gehäusehälfte ebenfalls eine formschlüssige Verbindung. Während die Aufnahme in der Gehäusehälfte den weiblichen Teil einer Steckverbindung darstellt, ist der männliche Teil der Steckverbindung durch die radialen Vorsprünge am Anschlussstück gegeben. Das Anschlussstück ist nach dem Einsetzen in eine Gehäusehälfte oder in das Gehäuse sowohl in axialer Richtung als auch gegen Verdrehen gesichert. Weiterhin sind die Gehäusehälften oder das Gehäuse form- und/oder kraftschlüssig an der Spülkastenwand fixierbar.
Vorteilhafterweise ist im Bereich der Stoß- oder Fügekanten der Gehäusehälften eine Profilierung vorgesehen. Dazu kann einerseits im Bereich der Stoß- oder Fügekanten der Gehäusehälften eine Vertiefung, ein Falz oder eine Nut und andererseits ein Vorsprung, ein Falz oder ein Stift vorgesehen sein. Damit können alle Kräfte, die senkrecht und waagerecht auf die Stoßfuge der Gehäusehälften wirken, auf die jeweils andere Gehäusehälfte übertragen werden. Somit können diese insgesamt von dem Gehäuse aufgenommen und weiter in den Spülkasten eingeleitet werden.
Prinzipiell können an einer Gehäusehälfte nur die Vertiefungen und an der anderen Gehäusehälfte nur die Vorsprünge angeordnet sein, um eine funktionierende formschlüssige Verbindung zu gewährleisten.
Vorteilhafterweise sind für das Gehäuse jedoch zwei komplementäre Halbschalen vorgesehen. Dies bedeutet, dass eine Gehäusehälfte jeweils eine Stoßkante mit einer Vertiefung und eine Stoßkante mit einem Vorsprung aufweist. Somit sind beide Gehäusehälften gleich ausgeformt, so dass zu deren Herstellung lediglich eine Gießform erforderlich ist.

Gemäß einer Weiterbildung der Erfindung ist an dem Gehäuse oder den Gehäusehälften je ein Hülsenbereich und ein Flanschbereich vorgesehen. Der Hülsenbereich dient zur Aufnahme des Anschlussstücks. Weiterhin ist im Hülsenbereich des Gehäuses ein Außengewinde vorgesehen. Der Flanschbereich dient sowohl zur axialen Fixierung des Gehäuses als auch zu dessen verdrehsicheren Lagerung.

Wenn die beiden Gehäusehälften um das Anschlussstück angeordnet und zusammengefügt sind, kann das Anschlussstück mit dem Gehäuse durch eine Öffnung der Spülkastenwand hindurchgeführt werden, bis es mit der dem Spülkasten zugewandten Innenseite des Flanschbereichs an der Spülkastenwand zur Anlage gelangt.
In dieser Position sind die beiden Gehäusehälften und somit deren formschlüssige Verbindung durch die Spülkastenwand fixiert. Damit nicht nur das Anschlussstück innerhalb des Gehäuses, sondern auch das Gehäuse selbst am Spülkasten verdrehsicher gelagert ist, sind am Spülkasten im Bereich der Öffnung für die Spülwasserzuflussleitung Erhöhungen oder Vertiefungen vorgesehen. Die Kanten der Vertiefungen oder Erhöhungen wirken mit dem Flanschbereich bzw. den Kanten des Flanschbereichs des Gehäuses zusammen und bilden eine starre Führung für das Gehäuse.

Vorteilhafterweise ist das Anschlussstück für die Spülwasserzuflussleitung zusammen mit dem Gehäuse von außen in die Öffnung des Spülkastens einbringbar. In diesem Zustand ist das Gehäuse jedoch noch nicht am Spülkasten fixiert. Daher ist eine Mutter oder Überwurfmutter vorgesehen, die auf das Außengewinde des Gehäuses aufgeschraubt werden kann. Nachdem das Gehäuse an der Spülkastenwand anliegt, kann die Mutter von der Innenseite des Spülkastens auf das Gehäuse des Anschlussstücks aufgeschraubt werden, so dass sowohl das Anschlussstück als auch das Gehäuse an der Spülkastenwand festgelegt sind.

Gemäß einer Weiterbildung der Erfindung weist das Anschlussstück ein Ventil, vorzugsweise ein Absperrventil auf. Üblicherweise ist das Absperrventil dabei als Eckventil vorgesehen. Dieses kann entweder über einen Drehgriff oder ein Betätigungselement in Form einer Ventilspindel mit einer Nut oder einem Sechskant geöffnet oder geschlossen werden. Vorteilhafterweise ist die lichte Öffnung der Mutter oder der Überwurfmutter so groß, dass diese über das Absperrventil oder mögliche Anschlussstutzen gestreift werden kann.

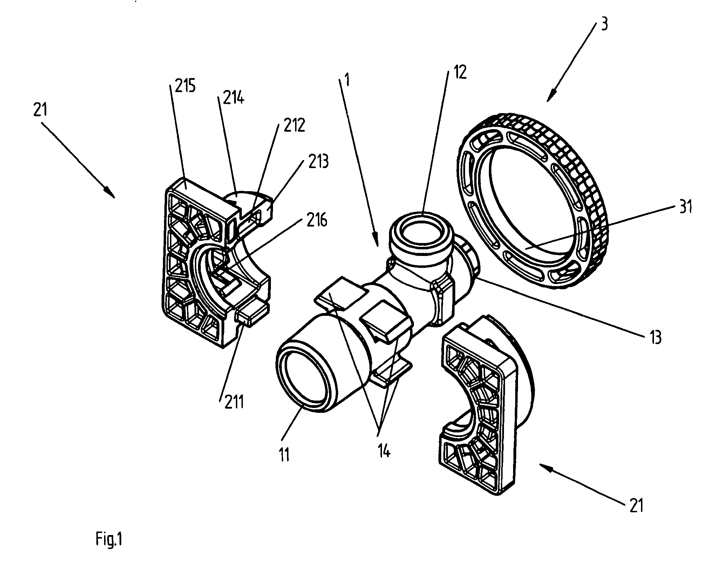

Gemäß einer Ausgestaltung der Erfindung kann das Anschlussstück einteilig oder mehrteilig sein. Weiterhin können die Abgänge, Anschlussstutzen oder die Anschlussgeometrien gerade oder abgewinkelt angeformt sein.
Ein Ausführungsbeispiel der Erfindung ist in der Zeichnung dargestellt und wird im Folgenden näher beschrieben. Es zeigt in der Zeichnung die
- Figur 1: eine Explosionsdarstellung eines Anschlussstückes, zweier Gehäusehälften und einer Überwurfmutter;
- Figur 2: einen teilweisen Schnitt durch einen erfindungsgemäßen Spülkasten im Bereich eines Anschlussstückes;
- Figur 3: einen Schnitt entlang der Linie III-III aus Figur 2 ohne Darstellung der Spülkastenwand.

In der Zeichnung sind gleiche oder entsprechende Elemente mit jeweils gleichen Bezugszeichen versehen.
Das in den Zeichnungen dargestellte Anschlussstück 1 für einen Spülkasten (nicht dargestellt), an welchem eine innere und eine äußere Spülwasserzuflussleitung (nicht dargestellt) angeschlossen werden können, weist zum Anschluss der äußeren Spülwasserzuflussleitung einen Einlassstutzen 11, für die Befestigung der inneren Spülwasserzuflussleitung einen Auslassstutzen 12 und ein Absperrventil 13 auf. Einlassstutzen 11 und Auslassstutzen 12 sind mittels einer Durchgangsöffnung verbunden, durch die das Wasser aus der äußeren Spülwasserzuflussleitung an eine innere Spülwasserleitung, die zu einer Einlaufeinheit im Spülkasteninnern führen kann, weitergegeben wird.
Zwischen Ein- und Auslassstutzen 11, 12 sind am Mantel des Anschlussstücks 1 radiale Vorsprünge 14 angeordnet. Die Vorsprünge 14 wirken mit einem Gehäuse 2 zusammen, das dazu dient, das Anschlussstück 1 in dem Spülkasten verdrehsicher und axial festliegend zu befestigen. Das Gehäuse 2 umfasst zwei Gehäusehälften 21, die auf das Anschlussstück 1 aufgesteckt werden können. Die Gehäusehälften 21 weisen jeweils Aufnahmen 216 für die Vorsprünge 14 des Anschlussstücks 1 auf. Außerdem sind an den Stoßkanten 213 der beiden Gehäusehälften 21 je ein Vorsprung 211 und eine Ausnehmung 212 vorgesehen, so dass die beiden Gehäusehälften 21 formschlüssig miteinander verbunden werden können. Zudem ist das Anschlussstück 1 über seine Vorsprünge 14 formschlüssig mit den Gehäusehälften 21 verbunden. Nach dem Aufstecken des Gehäuses 2 auf das Anschlussstück 1 ist dieses verdrehsicher und axial festliegend in dem Gehäuse 2 gelagert. Das Gehäuse 2 bzw. die Gehäusehälften 21 weisen einen Flanschbereich 215 und einen Hülsenbereich 214 auf. Auf den Hülsenbereich 214, auf dem ein Außengewinde angeordnet ist, kann zur Befestigung des Gehäuses 2 an dem Spülkasten eine Überwurfmutter 3 aufgeschraubt werden.

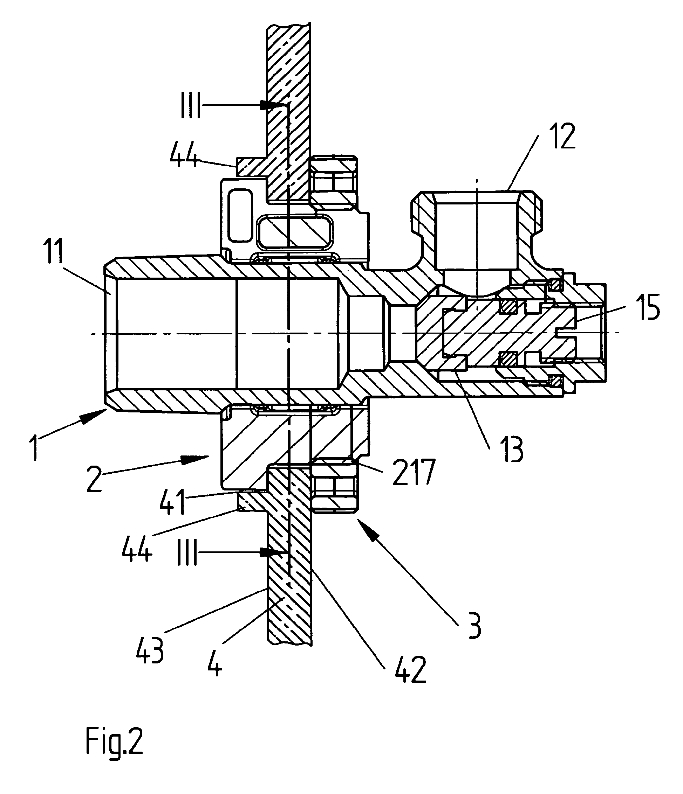

Figur 2 zeigt einen Schnitt durch ein Anschlussstück 1 in einer Einbausituation. Das Gehäuse 2 wurde auf das Anschlussstück 1 aufgesteckt und zusammen mit diesem von außen durch eine Öffnung 41 in einer Spülkastenwand 4 geschoben. Das lichte Maß der Öffnung 41 ist hierbei größer als die Abmessungen des Anschlussstücks 1 im Bereich des Auslassstutzens 12 vorgesehen, so dass dieses ebenfalls durch die Öffnung 41 hindurchpasst. Der Hülsenbereich 214 des Gehäuses 2 ist ebenfalls so bemessen, dass dieser durch die Öffnung 41 hindurch geführt werden kann. Sobald das Gehäuse 2 mit dem Hülsenbereich 214 in der Öffnung 41 liegt, sind auch die beiden Gehäusehälften 21 gegen Lösen gesichert. Der Flanschbereich 215 überdeckt die Öffnung 41 jedoch, so dass die Innenseite des Flanschbereichs 215 die Anschlagfläche des Gehäuses 2 an der Spülkastenaußenseite 43 bildet.
Zur verdrehsicheren Lagerung des Gehäuses 2 und somit des Anschlussstücks 1 an der Spülkastenwand 4 sind im vorliegenden Ausführungsbeispiel wenigstens zwei Erhöhungen 44 an der Spülkastenwand angeformt, von denen das Gehäuse 2 in der Einbaulage aufgenommen wird. Da der Flanschbereich 215 des Gehäuses 2 üblicherweise eine quadratische Form aufweist, ist es vorteilhaft, die Erhöhungen 44 als Eckstücke auszubilden, die eine quadratische Fläche entsprechend dem Flansch des Gehäuses 2 begrenzen.

Alternativ dazu könnten die Begrenzung des Flansches oder die Verdrehsicherung des Gehäuses 2 auch durch eine Einsenkung in der Spülkastenwand 4 erfolgen.

Zur axialen Sicherung des Anschlussstücks 1 oder des Gehäuses 2 ist eine Überwurfmutter 3 vorgesehen, die von der Spülkasteninnenseite 42 über das Anschlussstück 1 und auch über den Auslassstutzen 12 geschoben wird. Die Überwurfmutter 3 kann auf das Außengewinde des Hülsenbereichs 214 des Gehäuses 2 aufgeschraubt werden bis diese an der Spülkastenwand 4 zur Anlage gelangt. Weiterhin werden durch die Überwurfmutter 3 die beiden Gehäusehälften 21 lagesicher miteinander verbunden. Damit ist das Anschlussstück 1 am Spülkasten installiert.

An das installierte Anschlussstück 1 kann an der Spülkastenaußenseite 43 an ein Anschlussgewinde des Einlassstutzens 11 eine äußere Spülwasserzuflussleitung angeschlossen werden. Ebenso kann an einem inneren Anschlussgewinde des Auslassstutzens 12 eine innere Spülwasserzuflussleitung befestigt werden. Im vorliegenden Ausführungsbeispiel ist im Innenbereich des Spülkastens das Anschlussstück 1 als Eckventil ausgeführt. In der Durchgangsöffnung des Anschlussstücks 1 ist ein Absperrventil 13 angeordnet, dessen Ventilspindel 15, die mit dem Ventilverschlusskörper verbunden ist, eine Nut im Kopfbereich aufweist, so dass diese über einen Schraubendreher betätigt und verstellt werden kann.

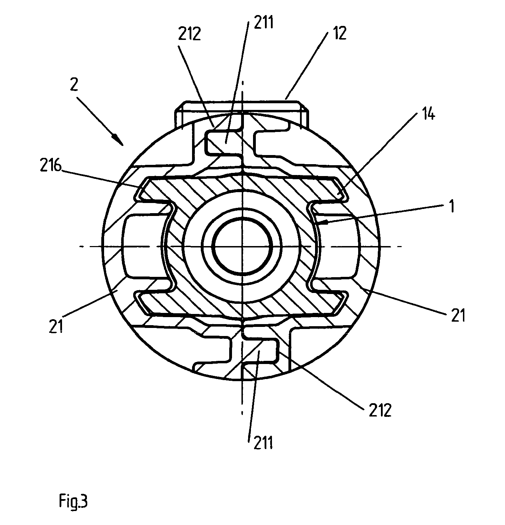

Figur 3 zeigt einen Schnitt durch das Anschlussstück 1 und das Gehäuse 2 mit den beiden Gehäusehälften 21 im Bereich der Vorsprünge 14. Bei der Montage des Anschlussstücks 1 an der Spülkastenwand 4 oder bei der Montage der Spülwasserzuflussleitungen am Anschlussstück 1 treten üblicherweise hohe Torsionsmomente auf. Die aus den Torsionsmomenten resultierenden Kräfte müssen dabei zunächst auf das Gehäuse 2 und dann auf die Spülkastenwand 4 übertragen werden. Da sowohl das Gehäuse 2 als auch der Spülkasten aus Kunststoff bestehen, muss darauf geachtet werden, dass die zulässigen Spannungen nicht überschritten werden, um Schäden und Verformungen und somit etwaige Undichtigkeiten zu vermeiden.
Die Form der Vorsprünge 14 am Anschlussstück 1 und die zugehörigen Aufnahmen 216 an den Gehäusehälften 21 ermöglichen, dass die Kräfte jeweils an vier Stellen in das Gehäuse 2 eingeleitet werden können, so dass die auftretenden Spannungen gering bleiben. Außerdem können die Vorsprünge 14 ohne weitere Nachbearbeitung beim Gießen des Anschlussstücks 1 hergestellt werden.

Aus der Zeichnung wird zudem deutlich, wie die beiden Gehäusehälften 21 ineinander verzahnt sind. Jede Gehäusehälfte 21 weist an der Stoßkante 213 jeweils einen Vorsprung 211 auf, der in eine Ausnehmung 212 der anderen Gehäusehälfte 21 eingreift. Wenn ein Torsionsmoment auf das Anschlussstück 1 wirkt, trägt dieses dazu bei, dass die Gehäusehälften 21 gegeneinander verpresst werden. Damit kann mit der Erfindung bei geringem Materialaufwand für das Anschlussstück 1 und die Befestigungsmittel Gehäuse 2 und Überwurfmutter 3 eine schnelle und sichere Montage gewährleistet werden.

### Bezugszeichenliste

- 1: Anschlussstück
- 11: Einlassstutzen
- 12: Auslassstutzen
- 13: Absperrventil
- 14: Vorsprung am Anschlussstück
- 15: Betätigungsvorrichtung für das Absperrventil, Ventilspindel
- 2: Gehäuse
- 21: Gehäusehälfte
- 211: Vorsprung an der Gehäusehälfte
- 212: Ausnehmung, Vertiefung für den Vorsprung an der Gehäusehälfte
- 213: Stoßkante, Fügekante
- 214: Hülsenbereich
- 215: Flanschbereich
- 216: Aufnahme für den Vorsprung am Anschlussstück
- 3: Mutter, Überwurfmutter
- 31: Innengewinde
- 4: Spülkastenwand
- 41: Öffnung in der Spülkastenwand
- 42: Spülkasteninnenseite
- 43: Spülkastenaußenseite
- 44: Erhöhung, Profilierung an der Spülkastenaußenseite

## Patentansprüche

1. Spülkasten mit
- einem in einer Öffnung (41) einer Spülkastenwand (4) angeordneten Anschlussstück (1) für eine innere und eine äußere Spülwasserzuflussleitung,
- und einem Gehäuse (2) zur Fixierung des Anschlussstücks (1) in der Spülkastenwand (4), wobei das Anschlussstück (1) axial festliegend und verdrehsicher in dem Gehäuse (2) gelagert ist,
**dadurch gekennzeichnet, dass**
- das Gehäuse (2) aus zwei formschlüssig miteinander verbindbaren Gehäusehälften vorgesehen ist.

2. Spülkasten gemäß Anspruch 1, **dadurch gekennzeichnet, dass** das Gehäuse (2) oder die Gehäusehälften (21) form- und/oder kraftschlüssig and der Spülkastenwand fixierbar sind.

3. Spülkasten gemäß Anspruch 1 oder 2, **dadurch gekennzeichnet, dass** das Gehäuse (2) oder die Gehäusehälften (21) einen Hülsenbereich (214) und einen Flanschbereich (215) aufweisen.

4. Spülkasten gemäß einem der vorhergehenden Ansprüche, **dadurch gekennzeichnet, dass** für das Gehäuse (2) zwei komplementäre Halbschalen vorgesehen sind.

5. Spülkasten gemäß einem der vorhergehenden Ansprüche, **dadurch gekennzeichnet, dass** im Bereich der Stoß- oder Fügekanten (213) der Gehäusehälften (21) eine Profilierung vorgesehen ist.

6. Spülkasten gemäß einem der vorhergehenden Ansprüche, **dadurch gekennzeichnet, dass** im Bereich der Stoß- oder Fügekanten (213) der Gehäusehälften (21) eine Ausnehmung (212), ein Falz oder eine Nut vorgesehen ist.

7. Spülkasten gemäß einem der vorhergehenden Ansprüche, **dadurch gekennzeichnet, dass** im Bereich der Stoß- oder Fügekanten (213) der Gehäusehälften (21) ein Vorsprung (211) oder Stift vorgesehen ist.

8. Spülkasten gemäß einem der vorhergehenden Ansprüche **dadurch gekennzeichnet, dass** zur verdrehsicheren Lagerung des Gehäuses (2) an der Spülkastenwand Erhöhungen (44) oder Vertiefungen im Bereich der Öffnung (41) vorgesehen sind, die mit dem Flanschbereich (215) des Gehäuses (2) zusammenwirken.

9. Spülkasten gemäß einem der vorhergehenden Ansprüche, **dadurch gekennzeichnet, dass** im Hülsenbereich (214) des Gehäuses (2) ein Außengewinde vorgesehen ist.

10. Spülkasten gemäß einem der vorhergehenden Ansprüche, **dadurch gekennzeichnet, dass** zur axialen Sicherung des Gehäuses (2) an der Spülkastenwand eine Mutter (3) vorgesehen ist.

11. Spülkasten gemäß einem der vorhergehenden Ansprüche, **dadurch gekennzeichnet, dass** das Anschlussstück (1) ein Absperrventil aufweist.

12. Spülkasten gemäß Anspruch 11, **dadurch gekennzeichnet, dass** das Absperrventil ein Eckventil ist.

13. Spülkasten gemäß einem der vorhergehenden Ansprüche, **dadurch gekennzeichnet, dass** das Anschlussstück (1) einteilig oder mehrteilig sein kann.

14. Spülkasten gemäß einem der vorhergehenden Ansprüche, **dadurch gekennzeichnet, dass** das Anschlussstück (1) zusammen mit dem Gehäuse (2) von außen in die Öffnung (41) der Spülkastenwand einbringbar ist.

15. Spülkasten gemäß einem der vorhergehenden Ansprüche, **dadurch gekennzeichnet, dass** die Mutter zur axialen Sicherung des Gehäuses von der Innenseite der Spülkastenwand befestigbar ist.

## Claims

1. Flushing cistern having
- a connection piece (1) for an inner and an outer flushing water supply line, which connection piece is arranged in an opening (41) in a flushing cistern wall (4),
- and a housing (2) for fixing the connection piece (1) in the flushing cistern wall (4), the connection piece (1) being mounted in the housing (2) so as to be axially fixed and secured against rotation,
**characterised in that**
- the housing (2) is provided from two housing halves which are interlockingly connectible to one another.

2. Flushing cistern according to claim 1, **characterised in that** the housing (2) or the housing halves (21) are fixable on the flushing cistern wall by means of an interlocking and/or force-based connection.

3. Flushing cistern according to claim 1 or 2, **characterised in that** the housing (2) or the housing halves (21) have a sleeve region (214) and a flange region (215).

4. Flushing cistern according to any one of the preceding claims, **characterised in that** two complementary half-shells are provided for the housing (2).

5. Flushing cistern according to any one of the preceding claims, **characterised in that** a shaped portion is provided in the region of the abutting or joint edges (213) of the housing halves (21).

6. Flushing cistern according to any one of the preceding claims, **characterised in that** a recess (212), a rabbet or a groove is provided in the region of the abutting or joint edges (213) of the housing halves (21).

7. Flushing cistern according to any one of the preceding claims, **characterised in that** a projection (211) or peg is provided in the region of the abutting or joint edges (213) of the housing halves (21).

8. Flushing cistern according to any one of the preceding claims, **characterised in that** for mounting the housing (2) on the flushing cistern wall so as to be secured against rotation, prominences (44) or depressions are provided in the region of the opening (41), which prominences or depressions co-operate with the flange region (215) of the housing (2).

9. Flushing cistern according to any one of the preceding claims, **characterised in that** an external thread is provided in the sleeve region (214) of the housing (2).

10. Flushing cistern according to any one of the preceding claims, **characterised in that** a nut (3) is provided for axially securing the housing (2) on the flushing cistern wall.

11. Flushing cistern according to any one of the preceding claims, **characterised in that** the connection piece (1) has a shut-off valve.

12. Flushing cistern according to claim 11, **characterised in that** the shut-off valve is an angle valve.

13. Flushing cistern according to any one of the preceding claims, **characterised in that** the connection piece (1) can be of single-part or multi-part construction.

14. Flushing cistern according to any one of the preceding claims, **characterised in that** the connection piece (1), together with the housing (2), is introducible into the opening (41) in the flushing cistern wall from the outside.

15. Flushing cistern according to any one of the preceding claims, **characterised in that** the nut for axially securing the housing is mountable from the inner side of the flushing cistern wall.

## Revendications

1. °) Réservoir de chasse d'eau comprenant :
un raccord de connexion (1) situé dans une ouverture (41), d'une paroi (4) de la chasse d'eau pour permettre la connexion d'une conduite d'alimentation en eau de rinçage interne et externe,
- et un boîtier (2) pour permettre de fixer le raccord (1) dans la paroi (4) de la chasse d'eau, ce raccord (1) étant monté fixe axialement et bloqué en rotation dans le boîtier (2),
**caractérisé en ce que**
le boîtier (2) est réalisé à partir de deux moitiés de boîtier pouvant être reliées l'une à l'autre par une liaison par la forme.

2. °) Chasse d'eau conforme à la revendication 1,
**caractérisée en ce que**
le boîtier (2) ou les moitiés de boîtier (21) peuvent être fixées sur la paroi de la chasse d'eau par une liaison par la forme et/ou par la force.

3. °) Chasse d'eau conforme à la revendication 1 ou 2,
**caractérisée en ce que**
le boîtier (2) ou les moitiés de boîtier (21) comportent une zone de manchon (214) et une zone de bride (215).

4. °) Chasse d'eau conforme à l'une des revendications précédentes,
**caractérisée en ce que**
deux demi coques complémentaires sont prévues pour le boîtier (2).

5. °) Chasse d'eau conforme à l'une des revendications précédentes,
**caractérisée en ce qu'**
il est prévu un profilage dans la zone des arêtes de mise en butée ou de jointure (213) des moitiés de boîtier (21).

6. °) Chasse d'eau conforme à l'une des revendications précédentes,
**caractérisée en ce qu'**
il est prévu un évidement (212), une feuillure ou une rainure dans la zone des arêtes de mise en butée ou de jointure (213) des moitiés de boîtier (21).

7. °) Chasse d'eau conforme à l'une des revendications précédentes,
**caractérisée en ce qu'**
il est prévu une saillie (211) ou une broche dans zone des arêtes de mise en butée ou de jointure (213) de moitiés de boîtier (21).

8. °) Chasse d'eau conforme à l'une des revendications précédentes,
**caractérisée en ce que**
pour permettre le montage bloqué en rotation du boîtier (2) sur la paroi de la chasse d'eau, il est prévu dans la zone de l'ouverture (40) des bossages (44) ou des cavités (41) qui coopèrent avec la zone de bride (215) du boîtier (2).

9. °) Chasse d'eau conforme à l'une des revendications précédentes,
**caractérisée en ce que**
dans la zone de manchon (214) du boîtier (2) il est prévu un filetage externe.

10. °) Chasse d'eau conforme à l'une des revendications précédentes,
**caractérisée en ce que**
pour permettre le blocage axial du boîtier (2) sur la paroi de la chasse d'eau, il est prévu un écrou (3).

11. °) Chasse d'eau conforme à l'une des revendications précédentes,
**caractérisée en ce que**
le raccord (1) comporte une soupape d'arrêt.

12. °) Chasse d'eau conforme à la revendication 11,
**caractérisée en ce que**
la soupape d'arrêt est une soupape d'équerre.

13. °) Chasse d'eau conforme à l'une des revendications précédentes,
**caractérisée en ce que**
le raccord (1) peut être en une ou en plusieurs parties.

14. °) Chasse d'eau conforme à l'une des revendications précédentes,
**caractérisée en ce que**
le raccord (1) peut être introduit par l'extérieur avec le boîtier (2) dans l'ouverture (41) de la paroi de la chasse d'eau.

15. °) Chasse d'eau conforme à l'une des revendications précédentes,
**caractérisée en ce que**
pour permettre le blocage axial du boîtier, l'écrou peut être fixé à partir de la face interne de la paroi de la chasse d'eau.
